# EUROPEAN PATENT APPLICATION

(11) **EP 4 825 684 A1**
(43) Date of publication of application: **21.10.2026**
(21) Application number: 24829574.3
(22) Date of filing: 26.11.2024
(51) Int. Cl.: B60W 30/14, B60W 40/105, B60W 50/029, B60W 50/14

(54) **PROCESSING DEVICE INSTALLED IN LEANING VEHICLE, AND PROCESSING METHOD**

(30) Priority: 12.12.2023 JP 2023209652
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/061850
(87) International publication number: WO 2025/125959

(57) **Abstract**

The invention obtains a processor capable of improving accuracy of speed information. The invention also obtains a processing method capable of improving accuracy of speed information.

A processor (20) that is mounted on a lean vehicle (100) includes an acquisition section that acquires speed information as information on a vehicle speed and/or a wheel speed of the lean vehicle (100). The acquisition section acquires positional relationship information between the lean vehicle (100) and a stationary target around the lean vehicle (100) based on output of a surrounding environment sensor (11) mounted to the lean vehicle (100), and acquires speed information based on the positional relationship information.

## Description

### Technical Field

The present invention relates to a processor that is mounted to a lean vehicle and to a processing method that is executed by such a processor.

### Background Art

Some conventional processors include an acquisition section that acquires speed information as information on a vehicle speed and/or a wheel speed of a lean vehicle (for example, see PTL 1).

### Citation List

### Patent Literature

PTL 1: WO 2014/069102

### Summary of Invention

### Technical Problem

It can be assumed that the conventional processor cannot acquire the speed information with sufficient accuracy.

The invention has been made with the above-described problem as the background and therefore obtains a processor capable of improving accuracy of speed information. The invention also obtains a processing method capable of improving accuracy of speed information.

### Solution to Problem

A processor according to the invention is a processor mounted on a lean vehicle, and includes an acquisition section that acquires speed information as information on a vehicle speed and/or a wheel speed of the lean vehicle. The acquisition section acquires positional relationship information between the lean vehicle and a stationary target around the lean vehicle, based on output of surrounding environment sensor mounted to the lean vehicle, and acquires the speed information based on the positional relationship information.

A processing method according to the invention is a processing method that is executed by a processor mounted on a lean vehicle, and includes: acquiring speed information as information on a vehicle speed and/or a wheel speed of the lean vehicle by an acquisition section of the processor. The acquisition section acquires positional relationship information between the lean vehicle and a stationary target around the lean vehicle, based on output of surrounding environment sensor mounted to the lean vehicle, and acquires the speed information based on the positional relationship information.

### Advantageous Effects of Invention

In the processor and the processing method according to the invention, the acquisition section acquires the positional relationship information between the lean vehicle and the stationary target around the lean vehicle based on the output of the surrounding environment sensor mounted to the lean vehicle, and acquires the speed information based on the positional relationship information. Thus, accuracy of the speed information can be improved.

### Brief Description of Drawings

Fig. 1 is a view illustrating a mounted state of a rider-assistance system according to an embodiment of the invention to a lean vehicle.
Fig. 2 is a diagram illustrating a system configuration of the rider-assistance system according to the embodiment of the invention.
Fig. 3 is a view illustrating a configuration of the rider-assistance system according to the embodiment of the invention.
Fig. 4 is another view illustrating the configuration of the rider-assistance system according to the embodiment of the invention.
Fig. 5 is a chart illustrating an operation flow of a processor in the rider-assistance system according to the embodiment of the invention.

### Description of Embodiments

A description will hereinafter be made on a processor and a processing method according to the invention with reference to the drawings.

A configuration, operation, and the like, which will be described below, merely constitute one example, and the processor and the processing method according to the invention are not limited to a case with such a configuration, such operation, and the like.

For example, a description will hereinafter be made on a case where the processor and the processing method according to the invention are applied to a two-wheeled motorcycle. However, the processor and the processing method according to the invention may be applied to a lean vehicle other than the two-wheeled motorcycle. The lean vehicle means a vehicle in general that travels in a state of being tilted in a turning direction during a turn. That is, a body of the lean vehicle is tilted to the right when turning in a right direction, and the body thereof is tilted to the left when turning in a left direction. Examples of the lean vehicle are the two-wheeled motorcycle, a three- wheeled motorcycle, and a bicycle. The motorcycles include a vehicle that has an engine as a propelling source, a vehicle that has an electric motor as the propelling source, and the like, for example. Examples of the motorcycle are a bike, a scooter, and an electric scooter. The bicycle means a vehicle in general that can travel forward on a road by a depression force applied to pedals by a rider. Examples of the bicycle are a normal bicycle, an electrically-assisted bicycle, and an electric bicycle.

The same or similar description will appropriately be simplified or will not be made below. In the drawings, the same or similar portions will be denoted by the same reference sign or will not be denoted by a reference sign. A detailed structure will be appropriately illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

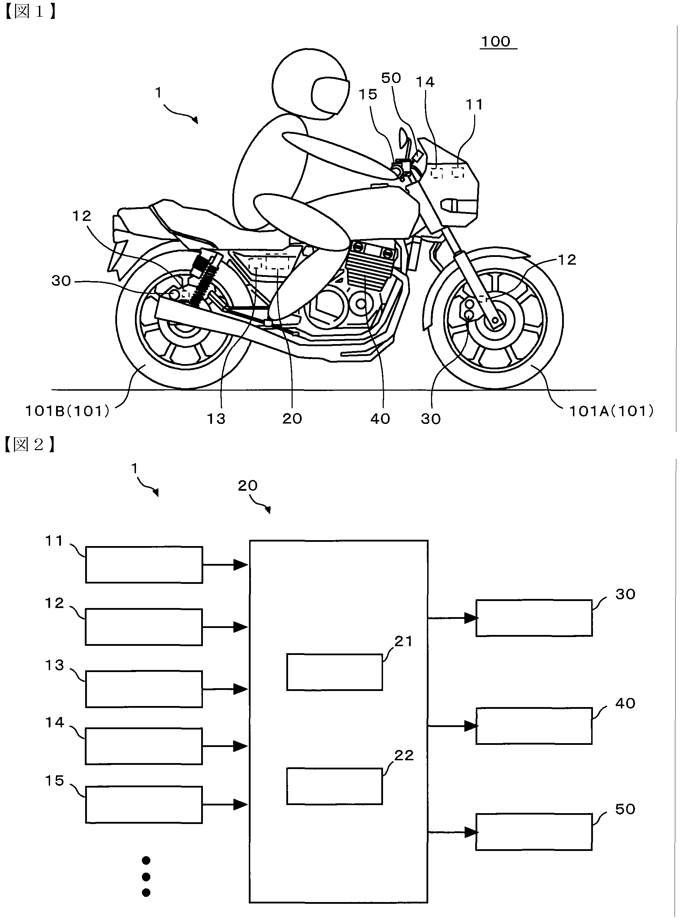

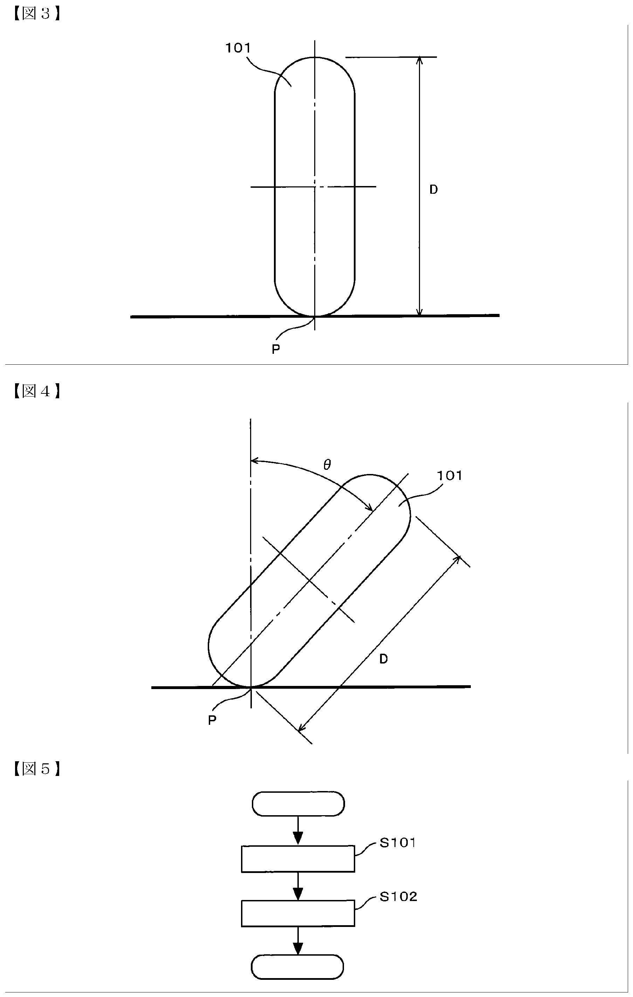

Fig. 1 is a view illustrating a mounted state of the rider-assistance system according to the embodiment of the invention to a lean vehicle. Fig. 2 is a diagram illustrating a system configuration of the rider-assistance system according to the embodiment of the invention. Figs. 3 and 4 are views, each of which illustrates a configuration of the rider-assistance system according to the embodiment of the invention. Figs. 3 and 4 each illustrate a state where a wheel 101 is seen from the front.

As illustrated in Figs. 1 and 2, a rider-assistance system 1 is mounted to a lean vehicle 100. For example, the rider-assistance system 1 includes a surrounding environment sensor 11, a wheel speed sensor 12, an inertial sensor 13, a positioning sensor 14, a setting input device 15, a processor (ECU) 20, a brake system 30, a drive system 40, and a notification device 50 when necessary.

In the rider-assistance system 1, the processor 20 uses output of the surrounding environment sensor 11, the wheel speed sensor 12, the inertial sensor 13, the positioning sensor 14, and the setting input device 15 to execute control operation for assisting a rider of the lean vehicle 100. The processor 20 outputs control commands to various devices (for example, the brake system 30, the drive system 40, the notification device 50, and the like) to execute the control operation. When necessary, the processor 20 receives output of various sensors for detecting other types of information (for example, a sensor for detecting operation state information on an operation section of the brake system 30 by the rider, a sensor for detecting operation state information of an operation section of the drive system 40 by the rider, and the like). Each component of the rider-assistance system 1 may exclusively be used for the rider-assistance system 1 or may be shared with another system.

The rider-assistance system 1 includes the at least one surrounding environment sensor 11 that detects surrounding environment information in front of the lean vehicle 100. The surrounding environment sensor 11 may detect the surrounding environment information behind the lean vehicle 100, may detect the surrounding environment information on a left side of the lean vehicle 100, or may detect the surrounding environment information on a right side of the lean vehicle 100. The rider-assistance system 1 may include surrounding environment sensors 11 of which detection ranges are different from each other. Examples of the surrounding environment sensor 11 are a radar, a Lidar sensor, an ultrasonic sensor, and a camera.

The wheel speed sensor 12 detects a rotational frequency of the wheel 101 of the lean vehicle 100. The rotational frequency may be number of revolutions per unit time or may be a rotation angle per unit time. The rider-assistance system 1 may have both or only one of: the wheel speed sensor 12 that detects a rotational frequency of a front wheel 101A of the lean vehicle 100; and the wheel speed sensor 12 that detects a rotational frequency of a rear wheel 101B of the lean vehicle 100. The wheel speed sensor 12 may detect another physical quantity that can substantially be converted to the rotational frequency of the wheel 101.

The inertial sensor 13 detects acceleration in three axes (a front-rear direction, a vehicle width direction, and a vehicle height direction) and angular velocities in three axes (a roll direction, a pitch direction, and a yaw direction) generated on the lean vehicle 100. The inertial sensor 13 may detect other physical quantities that can substantially be converted to the three-axis acceleration and the three-axis angular velocities generated on the lean vehicle 100. Alternatively, the inertial sensor 13 may partially detect the three-axis acceleration and the three-axis angular velocities.

The positioning sensor 14 receives positioning signals transmitted from plural communications satellites to detect positional information of the lean vehicle 100 on a global coordinate system. The position of the lean vehicle 100 is matched against map information, and the positional information of the lean vehicle 100 on a map is thereby acquired.

The setting input device 15 accepts the rider's operations to input various settings. For example, the rider can use the setting input device 15 to switch between validity and invalidity of various types of the control operation. In addition, for example, the rider can use the setting input device 15 to set various modes or various control parameters (for example, a threshold value, a target value, and the like) that are used in the various types of the control operation. The setting input device 15 may accept an operation by the rider's body (for example, a hand, a foot, or the like) or may accept voice produced by the rider. In addition, the setting input device 15 may be provided to the lean vehicle 100 or may be provided to an accessory (for example, a helmet, a glove, or the like) that is associated with the lean vehicle 100.

The processor 20 at least includes an acquisition section 21 and an execution section 22. A whole or each section of the processor 20 may collectively be provided in a single casing or may separately be provided in plural casings. In addition, a whole or each section of the processor 20 may be a microcomputer, a microprocessor unit, or the like, may be one whose firmware or the like can be updated, or may be a program module or the like that is executed by a command from a CPU or the like, for example.

The acquisition section 21 acquires the surrounding environment information of the lean vehicle 100 based on the output of the surrounding environment sensor 11. The surrounding environment information can include positional relationship information between the lean vehicle 100 and a target (for example, a vehicle, an obstacle, a road facility, a person, an animal, or the like) that is located around the lean vehicle 100. Examples of the positional relationship information are information on a relative position, a relative distance, a relative speed, relative acceleration, relative jerk, a passing time difference, and a predicted time until a collision. The positional relationship information may be information on another physical quantity that can substantially be converted to one of those. Furthermore or alternatively, the surrounding environment information can include characteristic information of the target (for example, the vehicle, the obstacle, the road facility, the person, the animal, or the like) that is located around the lean vehicle 100. Examples of the characteristic information are traffic sign information as information on a content of a traffic sign, drawing information as information on a content of a drawing on a road, traffic light information as information on a state of a traffic light, and traffic information as information on a state of traffic jam, construction work, and/or an accident. The characteristic information may be information on another physical quantity that can substantially be converted to any of those. The road facilities include the traffic sign, the drawing on the road, the traffic light, a street tree, a utility pole, a guardrail, a curbstone, a billboard, and the like.

The acquisition section 21 acquires speed information that is information on a vehicle speed and/or the wheel speed of the lean vehicle 100. The vehicle speed is defined as a distance that a body of the lean vehicle 100 travels per unit time. The speed information may be information on another physical quantity that can substantially be converted to such a distance. The wheel speed is defined as a distance that a ground contact portion P (see Figs. 3 and 4 described below) of the wheel 101 of the lean vehicle 100 travels per unit time by rotation of the wheel 101, that is, a value acquired by multiplying the rotational frequency (that is, a value acquired by dividing the number of revolutions or the rotation angle per unit time by 360 degrees) of the wheel 101, which is detected by the wheel speed sensor 12, by a diameter of the ground contact portion P (see Figs. 3 and 4 described below) of the wheel 101 and pi. The speed information may be information on another physical quantity that can substantially be converted to such a distance.

Here, the acquisition section 21 acquires positional relationship information between the lean vehicle 100 and a stationary target based on the output of the surrounding environment sensor 11. The stationary target is a target (e.g., the obstacle, the road facility, or the like) that is stationary and located around the lean vehicle 100. The acquisition section 21 acquires first speed information as the speed information, which is the information on the vehicle speed and/or the wheel speed of the lean vehicle 100, based on the positional relationship information. The positional relationship information includes information on the relative speed. The acquisition section 21 may extract the target in a similar shape to a pre-registered shape from the surrounding environment information and identify the stationary target. Furthermore or alternatively, the acquisition section 21 may match the positional information of the lean vehicle 100, which is acquired based on the output of the positioning sensor 14, against the map information, in which a position of the road facility is input in advance, estimate a region within the detection range of the surrounding environment sensor 11 where the road facility is detected, and thereby identify the stationary target from the surrounding environment information. In the case where the first speed information is acquired as the information on the vehicle speed of the lean vehicle 100, the first speed information can also be acquired as the information on the wheel speed of the lean vehicle 100 under the assumption that the wheel 101 is not slipping. Meanwhile, in the case where the first speed information is acquired as the information on the wheel speed of the lean vehicle 100, the first speed information can also be acquired as the information on the vehicle speed of the lean vehicle 100 under the assumption that the wheel 101 is not slipping.

As an example (hereinafter referred to as a "first speed information acquisition example"), under the assumption that the target identified as a positional relationship information acquisition target is located in a direction that is not significantly shifted from the front-rear direction or an advancing direction of the lean vehicle 100, the acquisition section 21 acquires, as the information on the vehicle speed of the lean vehicle 100, information on a relative speed between the lean vehicle 100 and the stationary target around the lean vehicle 100. Alternatively, in the case where the target identified as the positional relationship information acquisition target is located in a direction that is significantly shifted from the front-rear direction or the advancing direction of the lean vehicle 100 (for example, a case where the surrounding environment sensor 11 has a large viewing angle and the target identified as the positional relationship information acquisition target is detected at a position away from a center of the viewing angle, or the like), the acquisition section 21 acquires, as the information on the vehicle speed of the lean vehicle 100, information that is acquired by correcting a shifting amount for the information on the relative speed between the lean vehicle 100 and the stationary target around the lean vehicle 100. The acquisition section 21 may acquire a statistical value based on plural pieces of the positional relationship information and acquire the information on the vehicle speed of the lean vehicle 100 based on the statistical value. The acquisition section 21 acquires the statistical value based on the outputs that are output by the surrounding environment sensor 11 at time points different from each other. Furthermore or alternatively, the acquisition section 21 acquires the statistical value based on the outputs of the surrounding environment sensors 11 of which detection ranges are different from each other. In the case where the output of the surrounding environment sensors 11 at the same time point differs to the extent that exceeds an allowable value, the output may not be adopted. Statistical processing for acquiring the statistical value may be processing to select a mode of a frequency distribution, may be processing to calculate a mean of values detected in a predetermined period, or may be processing to calculate a median of time series data that has been filtered (for example, by a low-pass filter or the like). The acquisition section 21 may execute the statistical processing on the positional relationship information or may execute the statistical processing on the information that is acquired based on the positional relationship information.

As another example (hereinafter referred to as a "second speed information acquisition example"), under the assumption that the lean vehicle 100 travels while constantly keeping an upright posture, the acquisition section 21 acquires shape information of the wheel 101 based on the information on the relative speed between the lean vehicle 100 and the stationary target around the lean vehicle 100 as well as the output of the wheel speed sensor 12, and acquires the information on the wheel speed of the lean vehicle 100 based on the shape information and the output of the wheel speed sensor 12. As illustrated in Fig. 3, in a state where the lean vehicle 100 travels while keeping the upright posture, a diameter D of the ground contact portion P of the wheel 101 is acquired by dividing the relative speed between the lean vehicle 100 and the stationary target around the lean vehicle 100 or a value, which is acquired by correcting the relative speed in a similar manner to that in the first speed information acquisition example, by the rotational frequency (that is, the value acquired by dividing the number of revolutions or the rotation angle per unit time by 360 degrees) of the wheel 101, which is detected by the wheel speed sensor 12 at the time point, and pi. The acquisition section 21 acquires the diameter D as the shape information of the wheel 101, for example. Here, as the shape information of the wheel 101, a value acquired by multiplying the diameter D by pi may be acquired. The acquisition section 21 may acquire the statistical value based on the plural pieces of the positional relationship information and acquire the information on the vehicle speed of the lean vehicle 100 based on the statistical value. The acquisition section 21 acquires the statistical value based on the outputs that are output by the surrounding environment sensor 11 at time points different from each other. Furthermore or alternatively, the acquisition section 21 acquires the statistical value based on the outputs of the surrounding environment sensors 11 of which detection ranges are different from each other. In the case where the output of the surrounding environment sensors 11 at the same time point differs to the extent that exceeds the allowable value, the output may not be adopted. The statistical processing for acquiring the statistical value may be the processing to select the mode of the frequency distribution, may be the processing to calculate the mean of the values detected in the predetermined period, or may be the processing to calculate the median of the time series data that has been filtered (for example, by the low-pass filter or the like). The acquisition section 21 may execute the statistical processing on the positional relationship information or may execute the statistical processing on the information that is acquired based on the positional relationship information. By continuously acquiring the diameter D and periodically updating the shape information of the wheel 101, the acquisition section 21 can estimate the latest shape of the wheel 101, for which tire conditions (for example, an air pressure, deterioration, and the like) are taken into consideration. The acquisition section 21 acquires the information on the wheel speed of the lean vehicle 100 at a current time point by multiplying the latest shape information (that is, the diameter D) of the wheel 101 by the rotational frequency (that is, the value acquired by dividing the number of revolutions or the rotation angle per unit time by 360 degrees) of the wheel 101, which is detected by the wheel speed sensor 12 at the current time point, and pi.

As further another example (hereinafter referred to as a "third speed information acquisition example"), under the assumption that the lean vehicle 100 travels while not constantly keeping the upright posture, the acquisition section 21 acquires the shape information of the wheel 101 based on the information on the relative speed between the lean vehicle 100 and the stationary target around the lean vehicle 100, tilted state information of the wheel 101, and the output of the wheel speed sensor 12, and then acquires the information on the wheel speed of the lean vehicle 100 based on the shape information, the tilted state information of the wheel 101, and the output of the wheel speed sensor 12. As illustrated in Fig. 4, in a state where the lean vehicle 100 travels while making a turn, the diameter D of the ground contact portion P of the wheel 101 is acquired by dividing the relative speed between the lean vehicle 100 and the stationary target around the lean vehicle 100 or the value, which is acquired by correcting the relative speed in the similar manner to that in the first speed information acquisition example, by the rotational frequency (that is, the value acquired by dividing the number of revolutions or the rotation angle per unit time by 360 degrees) of the wheel 101, which is detected by the wheel speed sensor 12 at the time point, and pi. That is, as a bank angle θ of the wheel 101 is increased, the diameter D is reduced. Thus, the acquisition section 21 acquires the calculated diameter D in association with the bank angle θ of the wheel 101, and acquires a data group thereof as the shape information of the wheel 101. Here, as the shape information of the wheel 101, the value acquired by multiplying the diameter D by pi may be acquired. The acquisition section 21 may acquire the shape information based on the statistical value that is a value acquired by subjecting the plural pieces of the positional relationship information to the statistical processing. The acquisition section 21 acquires the statistical value based on the outputs that are output by the surrounding environment sensor 11 at the time points different from each other. Furthermore or alternatively, the acquisition section 21 acquires the statistical value based on the outputs of the surrounding environment sensors 11 of which detection ranges are different from each other. The statistical processing may be the processing to select the mode of the frequency distribution, may be the processing to calculate the mean of the values detected in the predetermined period, or may be the processing to calculate the median of the time series data that has been filtered (for example, by the low-pass filter or the like). By continuously acquiring the diameter D and the bank angle θ of the wheel 101 and periodically updating the shape information of the wheel 101, the acquisition section 21 can estimate the latest shape of the wheel 101, for which the tire conditions (for example, the air pressure, the deterioration, and the like) are taken into consideration. The acquisition section 21 acquires the diameter D, which corresponds to the bank angle θ of the wheel 101 acquired at the current time point, by using the latest shape information of the wheel 101, multiplies the diameter D by the rotational frequency (that is, the value acquired by dividing the number of revolutions or the rotation angle per unit time by 360 degrees) of the wheel 101, which is detected by the wheel speed sensor 12 at the current time point, and pi, and thereby acquires the information on the wheel speed of the lean vehicle 100 at the current time point. Here, under the assumption that the same bank angle as that of the body of the lean vehicle 100 is generated to the wheel 101, the tilted state information of the wheel 101 may be acquired based on the output of the inertial sensor 13 (for example, an integral value of the angular velocity in the roll direction of the body, the angular velocity in the yaw direction of the body, the acceleration in the vehicle width direction of the body, or the like). Alternatively, in the case where the wheel 101 is the front wheel 101A, the tilted state information of the wheel 101 may be acquired as a value that is acquired by correcting the value acquired based on the output of the inertial sensor 13 by a change in a steering angle of the lean vehicle 100.

The execution section 22 executes the control operation to assist the rider of the lean vehicle 100 based on the first speed information. Here, the acquisition section 21 may acquire second speed information, which is the speed information as the information on the vehicle speed or the wheel speed of the lean vehicle 100, based on the output of the wheel speed sensor 12, and the execution section 22 may execute the control operation to assist the rider of the lean vehicle 100 based on the first speed information and the second speed information. Under the assumption that the lean vehicle 100 travels while constantly keeping the upright posture, the acquisition section 21 acquires the second speed information by multiplying the rotational frequency (that is, the value acquired by dividing the number of revolutions or the rotation angle per unit time by 360 degrees) of the wheel 101, which is detected by the wheel speed sensor 12, by an outer diameter dimension of the wheel 101, which is registered initially. That is, the acquisition section 21 acquires the second speed information neither based on the positional relationship information between the lean vehicle 100 and the stationary target around the lean vehicle 100 nor the tilted state information of the wheel 101. The second speed information is acquired as the information on the wheel speed of the lean vehicle 100, but can also be acquired as the information on the vehicle speed of the lean vehicle 100 under the assumption that the wheel 101 is not slipping.

In a validated state of the control operation to assist the rider of the lean vehicle 100, the execution section 22 executes vehicle speed control operation of the lean vehicle 100 at least based on the first speed information when necessary. When executing the vehicle speed control operation, the execution section 22 outputs a control command to the brake system 30 and/or the drive system 40. The brake system 30 brakes the lean vehicle 100. The drive system 40 as a power source of the lean vehicle 100 drives the lean vehicle 100. The brake system 30 may be controlled to generate or increase deceleration, or may be controlled to generate or increase the acceleration. The drive system 40 may be controlled to generate or increase the acceleration, or may be controlled to generate or increase the deceleration. The vehicle speed control operation may be anti-lock brake control operation to control the deceleration generated to the lean vehicle 100 in order to suppress locking of the wheel 101. Alternatively, the vehicle speed control operation may be slip control operation to control the acceleration or the deceleration generated to the lean vehicle 100 in order to suppress the slip of the wheel 101. Alternatively, the vehicle speed control operation may be hill hold control operation to automatically maintain the braking force on the wheel 101 to keep the lean vehicle 100 in a stopped state when the lean vehicle 100 is stopped on an uphill or downhill slope. Alternatively, the vehicle speed control operation may be hill descent control operation to automatically adjust the braking force on the wheel 101 to cause the lean vehicle 100 to travel at a constant speed when the lean vehicle 100 travels on a downhill slope. Alternatively, the vehicle speed control operation may be cruise control operation to cause the lean vehicle 100 to travel at the set vehicle speed. Alternatively, the vehicle speed control operation may be adaptive cruise control operation that causes the lean vehicle 100 to travel at the set vehicle speed when the surrounding environment sensor 11 does not detect a preceding vehicle as a speed following target, and that executes positional relationship adjustment operation to adjust a positional relationship with the preceding vehicle to a target positional relationship in a state where the vehicle speed does not exceed the set vehicle speed when the surrounding environment sensor 11 detects the preceding vehicle as the speed following target. Alternatively, the vehicle speed control operation may be operation to execute the positional relationship adjustment operation for adjusting the positional relationship with the preceding vehicle to the target positional relationship only when the surrounding environment sensor 11 detects the preceding vehicle as the speed following target while the rider is operating the drive system 40. Alternatively, the vehicle speed control operation may be operation to execute the positional relationship adjustment operation for adjusting the positional relationship with the preceding vehicle to the target positional relationship only when the surrounding environment sensor 11 detects the preceding vehicle as the speed following target while the rider is operating the brake system 30. The adjustment target in the positional relationship adjustment operation may be the drawing (for example, a stop line or the like) on the road.

Furthermore or alternatively, in the validated state of the control operation to assist the rider of the lean vehicle 100, the execution section 22 outputs a control command to the notification device 50 at least based on the first speed information when necessary. The notification device 50 may notify the rider of the information by display (that is, a sensation through a visual organ as a sensory organ), may notify the rider of the information by sound (that is, a sensation through an auditory organ as the sensory organ), or may notify the rider of the information by vibration (that is, a sensation through a tactile organ as the sensory organ). Examples of the notification device 50 is a display, a lamp, a speaker, and a vibrator. The notification device 50 may be provided to the lean vehicle 100 or may be provided to the accessory (for example, the helmet, the glove, or the like) that is associated with the lean vehicle 100. In addition, notification operation may be operation to warn or notify the rider of the information by generating the instantaneous deceleration or acceleration to the lean vehicle 100. That is, the brake system 30 or the drive system 40 may constitute the notification device 50.

As an example, the execution section 22 outputs the control command to the notification device 50 and causes the notification device 50 to notify the rider of the information on the vehicle speed of the lean vehicle 100, which is acquired in the first speed information acquisition example, the second speed information acquisition example, or the third speed information acquisition example. Furthermore or alternatively, the execution section 22 outputs the control command to the brake system 30 and/or the drive system 40 and executes the vehicle speed control operation of the lean vehicle 100 based on the information on the vehicle speed of the lean vehicle 100, which is acquired in the first speed information acquisition example, the second speed information acquisition example, or the third speed information acquisition example.

As another example, in the control operation to assist the rider, the execution section 22 detects a stop and/or a start of the lean vehicle 100 based on the information on the vehicle speed of the lean vehicle 100, which is acquired in the first speed information acquisition example, the second speed information acquisition example, or the third speed information acquisition example. Such control operation is useful for the above-described positional relationship adjustment operation, the above-described hill hold control operation, and the like, for example. For example, in the case where the first speed information is information indicating that the vehicle speed of the lean vehicle 100 has become 0, or in the case where the first speed information is information indicating that a period in which the vehicle speed of the lean vehicle 100 is 0 exceeds a reference time, the execution section 22 determines that the lean vehicle 100 has been stopped. The execution section 22 may further validate the determination only when a change rate of the vehicle speed of the lean vehicle 100 falls below a reference. Meanwhile, in the case where the first speed information is information indicating that the vehicle speed of the lean vehicle 100 is no longer 0, or in the case where the first speed information is information indicating that the vehicle speed of the lean vehicle 100 does not become 0 even after a lapse of the period exceeding the reference time since the vehicle speed of the lean vehicle 100 is no longer 0, the execution section 22 determines that the lean vehicle 100 has been started. The execution section 22 may further validate the determination only when the change rate of the vehicle speed of the lean vehicle 100 exceeds the reference. The execution section 22 may detect the stop and/or the start based on the output of the inertial sensor 13 in addition to the first speed information. For example, in the case where it is determined that the acceleration in the front-rear direction of the lean vehicle 100 falls below a reference based on the output of the inertial sensor 13, the execution section 22 validates the determination of the stop that is based on the first speed information. In addition, in the case where it is determined that the acceleration in the front-rear direction of the lean vehicle 100 exceeds the reference based on the output of the inertial sensor 13, the execution section 22 validates the determination of the start that is based on the first speed information. Furthermore or alternatively, the execution section 22 may detect the stop and/or the start based on the output of the wheel speed sensor 12 in addition to the first speed information. In principle, the wheel speed sensor 12 outputs the rotational frequency of the wheel 101 as 0 when the wheel 101 is rotating at the extremely low rotational frequency. Accordingly, in the case where the wheel speed sensor 12 outputs the rotational frequency as 0, the execution section 22 validates the determination of the stop that is based on the first speed information. Meanwhile, in the case where the wheel speed sensor 12 does not output the rotational frequency as 0, the execution section 22 validates the determination of the start that is based on the first speed information. Furthermore or alternatively, the execution section 22 may detect the stop not only based on the first speed information at a first time point but also based on travel state information of the lean vehicle 100 at a second time point prior to the first time point. The travel state information is the speed information or the like that is acquired based on the second speed information or information that is not used in the first speed information and the second speed information, for example. That is, in a process that the decelerated lean vehicle 100 comes to a stop, a stop time point can be estimated from the decelerated state of the lean vehicle 100 at the second time point under the assumption that the rider's operation of the operation section of the brake system 30 is stable. Accordingly, even in the case where it is determined that the lean vehicle 100 is stopped based on the first speed information, which is acquired at the first time point, the execution section 22 invalidates the determination when the first time point significantly differs from the estimated stop time point. Alternatively, when the time reaches the estimated stop time point, the execution section 22 determines whether the lean vehicle 100 is stopped based on the first speed information. In the case where the execution section 22 cannot acquire the first speed information (for example, a case where the surrounding environment sensor 11 does not detect the stationary target around the lean vehicle 100, or the like), the execution section 22 may detect the stop and/or the start based on information that complements the above-described determination of the stop and/or the start based on the first speed information.

As another example, the execution section 22 changes a priority order of the information on the vehicle speed of the lean vehicle 100, which is acquired in the first speed information acquisition example, that is, the first speed information acquired not based on the output of the wheel speed sensor 12 and the second speed information, and then executes the control operation to assist the rider. In principle, the wheel speed sensor 12 outputs the rotational frequency of the wheel 101 as 0 when the wheel 101 is rotating at the extremely low rotational frequency. Accordingly, in the process that the decelerated lean vehicle 100 comes to the stop, the execution section 22 gives the higher priority order to the second speed information than to the first speed information in a preliminary stage, and then gives the higher priority order to the first speed information than to the second speed information in a later stage (that is, a stage in which the vehicle speed of the lean vehicle 100 falls below the reference). Furthermore or alternatively, in a process that the stopped lean vehicle 100 is started and accelerated, the execution section 22 gives the higher priority order to the first speed information than to the second speed information in the preliminary stage, and gives the higher priority order to the second speed information than to the first speed information in the later stage (that is, a stage in which the vehicle speed of the lean vehicle 100 exceeds the reference). Furthermore or alternatively, in the case where the wheel speed sensor 12 fails (for example, low gains, failure, disconnection, or the like of a detection section), the execution section 22 may give the higher priority order to the first speed information than to the second speed information. For example, the execution section 22 can determine whether the wheel speed sensor 12 has failed based on a time course of the output of the wheel speed sensor 12. The phrase "gives the higher priority order" may mean only using the information with the higher priority order, or may mean using both of the information with the higher priority order and the information with the lower priority order by increasing weight of the information with the higher priority order to be greater than weight of the information with the lower priority order.

As another example, the execution section 22 changes the priority order of the information on the vehicle speed of the lean vehicle 100, which is acquired in the third speed information acquisition example, that is, the first speed information, which is acquired based on the positional relationship information between the lean vehicle 100 and the stationary target around the lean vehicle 100, and the second speed information, and then executes the control operation to assist the rider. In the second speed information, an error with respect to the vehicle speed and/or the rotational frequency that is actually generated to the lean vehicle 100 becomes more significant as the bank angle θ of the wheel 101 is increased. Thus, the execution section 22 changes the priority order of the first speed information and the second speed information based on the tilted state information of the wheel 101. For example, in the case where the tilted state information is information indicating that the bank angle θ falling below a reference is generated to the wheel 101, the execution section 22 gives the higher priority order to the second speed information than to the first speed information. In the case where the tilted state information is information indicating that the bank angle θ exceeding the reference is generated to the wheel 101, the execution section 22 gives the higher priority order to the first speed information than to the second speed information. Here, under the assumption that the same bank angle as that of the body of the lean vehicle 100 is generated to the wheel 101, the tilted state information of the wheel 101 may be acquired based on the output of the inertial sensor 13 (for example, the integral value of the angular velocity in the roll direction of the body, the angular velocity in the yaw direction of the body, the acceleration in the vehicle width direction of the body, or the like). Alternatively, in the case where the wheel 101 is the front wheel 101A, the tilted state information of the wheel 101 may be acquired as the value that is acquired by correcting the value acquired based on the output of the inertial sensor 13 by the change in the steering angle of the lean vehicle 100. The phrase "gives the higher priority order" may mean only using the information with the higher priority order, or may mean using both of the information with the higher priority order and the information with the lower priority order by increasing the weight of the information with the higher priority order to be greater than the weight of the information with the lower priority order.

### <Operation of Rider-Assistance System>

A description will be made on operation of the rider-assistance system according to the embodiment.

Fig. 5 is a chart of an operation flow of the processor in the rider-assistance system according to the embodiment of the invention.

The processor 20 executes the operation flow illustrated in Fig. 5 during the travel of the lean vehicle 100.

### (Acquisition Step)

In step S101, the acquisition section 21 acquires the positional relationship information between the lean vehicle 100 and the stationary target around the lean vehicle 100 based on the output of the surrounding environment sensor 11, and acquires the speed information that is the information on the vehicle speed and/or the wheel speed of the lean vehicle 100 based on the positional relationship information. The acquisition section 21 also acquires various types of the information when necessary.

### (Execution Step)

In step S102, the execution section 22 executes the control operation to assist the rider of the lean vehicle 100 based on the speed information that is acquired in step S101.

### <Effects of Rider-Assistance System>

A description will be made on effects of the rider-assistance system according to the embodiment.

In the rider-assistance system 1, the acquisition section 21 acquires the positional relationship information between the lean vehicle 100 and the stationary target around the lean vehicle 100 based on the output of the surrounding environment sensor 11 that is mounted to the lean vehicle 100, and acquires the first speed information that is the information on the vehicle speed and/or the wheel speed of the lean vehicle 100 based on the positional relationship information. Thus, accuracy of the first speed information can be improved.

Preferably, the acquisition section 21 acquires the shape information of the wheel 101 based on the positional relationship information and the output of the wheel speed sensor 12 for the wheel 101 of the lean vehicle 100, and acquires the first speed information based on the shape information and the output of the wheel speed sensor 12. Thus, it is possible to acquire the shape information that reflects the actual condition of the wheel 101. In particular, the acquisition section 21 preferably acquires the statistical value based on the plural pieces of the positional relationship information and acquires the shape information based on the statistical value. With such a configuration, accuracy of the shape information can be improved.

Preferably, the acquisition section 21 acquires the shape information of the wheel 101 based on the positional relationship information, the tilted state information of the wheel 101 of the lean vehicle 100, and the output of the wheel speed sensor 12 of the wheel 101, and acquires the first speed information based on the shape information, the tilted state information, and the output of the wheel speed sensor 12. Thus, it is possible to acquire the detailed shape information that reflects the actual condition of the wheel 101. In particular, the acquisition section 21 preferably acquires the statistical value based on the plural pieces of the positional relationship information and acquires the shape information based on the statistical value. With such a configuration, the accuracy of the shape information can be improved.

Preferably, the execution section 22 executes the control operation to assist the rider of the lean vehicle 100 based on the first speed information. In particular, in the control operation, the execution section 22 may detect the stop and/or the start of the lean vehicle 100 based on the first speed information. With such a configuration, accuracy of the detection of the stop and/or the start of the lean vehicle 100 can be improved. Furthermore or alternatively, the acquisition section 21 may acquire the second speed information that is the information on the vehicle speed and/or the wheel speed of the lean vehicle 100 not based on the positional relationship information between the lean vehicle 100 and the stationary target around the lean vehicle 100 but based on the output of the wheel speed sensor 12 for the wheel 101 of the lean vehicle 100, in addition to the first speed information. Then, the execution section 22 may change the priority order of the first speed information and the second speed information to execute the control operation. With such a configuration, the control operation can be executed based on the highly accurate speed information.

The description has been made so far on the embodiment. However, only a part of the embodiment may be implemented, parts of the embodiment may be combined, or a part of the embodiment may be modified to another aspect. In other words, the invention is not limited to the embodiment that has been described.

For example, the above description has been made on the case where the processor 20 includes the execution section 22 and the execution section 22 executes the control operation to assist the rider of the lean vehicle 100 based on the speed information. However, the speed information may be used for other purposes. That is, the processor 20 may not include the execution section 22.

### Reference Signs List

1: Rider-assistance system
11: Surrounding environment sensor
12: Wheel speed sensor
13: Inertial sensor
14: Positioning sensor
15: Setting input device
20: Processor
21: Acquisition section
22: Execution section
30: Brake system
40: Drive system
50: Notification device
100: Lean vehicle
101: Wheel
101A: Front wheel
101B: Rear wheel
P: Ground contact portion
D: Diameter
θ: Bank angle

## Claims

1. A processor (20) that is mounted on a lean vehicle (100), the processor comprising:
an acquisition section (21) that acquires speed information as information on a vehicle speed and/or a wheel speed of the lean vehicle (100), wherein
the acquisition section (21)
acquires positional relationship information between the lean vehicle (100) and a stationary target around the lean vehicle (100) based on output of a surrounding environment sensor (11) that is mounted to the lean vehicle (100), and
acquires the speed information based on the positional relationship information.

2. The processor according to claim 1, wherein
the acquisition section (21)
acquires shape information of a wheel (101) based on the positional relationship information and output of a wheel speed sensor (12) for the wheel (101) of the lean vehicle (100), and
acquires the speed information based on the shape information and the output of the wheel speed sensor (12) .

3. The processor according to claim 1, wherein
the acquisition section (21)
acquires shape information of a wheel (101) based on the positional relationship information, tilted state information of the wheel (101) of the lean vehicle (100), and output of a wheel speed sensor (12) for the wheel (101), and
acquires the speed information based on the shape information, the tilted state information, and the output of the wheel speed sensor (12).

4. The processor according to claim 2 or 3, wherein
the acquisition section (21)
acquires a statistical value based on plural pieces of the positional relationship information, and
acquires the shape information based on the statistical value.

5. The processor according to claim 4, wherein
the acquisition section (21) acquires the statistical value based on the outputs that are output by the surrounding environment sensor (11) at time points different from each other.

6. The processor according to claim 4, wherein
the acquisition section (21) acquires the statistical value based on outputs of a plurality of the surrounding environment sensors (11) of which detection ranges are different from each other.

7. The processor according to claim 1 further comprising:
an execution section (22) that executes control operation to assist a rider of the lean vehicle (100) based on the speed information.

8. The processor according to claim 7, wherein
in the control operation, the execution section (22) detects a stop and/or a start of the lean vehicle (100) based on the speed information.

9. The processor according to claim 8, wherein
in the control operation, the execution section (22) detects the stop and/or the start based on output of an inertial sensor (13) of the lean vehicle (100) in addition to the speed information.

10. The processor according to claim 8, wherein
in the control operation, in addition to the speed information at a first time point, the execution section (22) detects the stop based on travel state information of the lean vehicle (100) at a second point that is a time point prior to the first time point.

11. The processor (20) according to any one of claims 7 to 10, wherein
in addition to the speed information as first speed information, the acquisition section (21) acquires second speed information that is information on the vehicle speed and/or the wheel speed of the lean vehicle (100) not based on the positional relationship information but based on the output of the wheel speed sensor (12) for the wheel (101) of the lean vehicle (100), and
the execution section (22) changes a priority order of the first speed information and the second speed information to execute the control operation.

12. The processor according to claim 11, wherein
in a process that the decelerated lean vehicle (100) comes to the stop, the execution section (22) gives the high priority order to the first speed information.

13. The processor according to claim 11, wherein
in a process that the stopped lean vehicle (100) is started and accelerated, the execution section (22) gives the high priority order to the second speed information.

14. The processor according to claim 11, wherein
in the case where the wheel speed sensor (12) fails, the execution section (22) gives the high priority order to the first speed information.

15. A processing method that is executed by a processor (20) mounted on a lean vehicle (100), the processing method comprising:
acquiring speed information as information on a vehicle speed and/or a wheel speed of the lean vehicle (100) by an acquisition section (21) of the processor (20), wherein
the acquisition section (21)
acquires positional relationship information between the lean vehicle (100) and a stationary target around the lean vehicle (100) based on output of a surrounding environment sensor (11) that is mounted to the lean vehicle (100), and
acquires the speed information based on the positional relationship information.
